# EUROPEAN PATENT APPLICATION

(11) **EP 4 372 053 A1**
(43) Date of publication of application: **22.05.2024**
(21) Application number: 22849426.6
(22) Date of filing: 25.07.2022
(51) Int. Cl.: C08L 71/10, C08K 3/32

(54) **WHOLLY AROMATIC ETHER KETONE RESIN COMPOSITION, METHOD FOR PRODUCING SAME, MOLDED ARTICLE, AND METHOD FOR IMPROVING RESIDENCE STABILITY OF MELT VISCOSITY OF SAID RESIN COMPOSITION**

(30) Priority: 30.07.2021 JP 2021125542
(71) Applicant: Polyplastics Co., Ltd., Tokyo 108-8280 (JP)
(72) Inventor: TAKEUCHI Ryo, Fuji-shi, Shizuoka 416-8533 (JP)
(74) Representative: Maiwald GmbH
(86) International application number: PCT/JP2022/028602
(87) International publication number: WO 2023/008365

(57) **Abstract**

Provided is a fully aromatic ether ketone resin composition including: (A) a prescribed fully aromatic ether ketone resin; and (B) a salt composed of an acid and a base, in which a pH thereof obtained by performing measurement by means of a pH measurement method below is 6 to 8.

[pH measurement method]

(a) To 10 g of a powder of the fully aromatic ether ketone resin composition, 5 mL of acetone is added, then 100 mL of pure water is added thereto, a mixture is stirred for 10 minutes, and then the mixture is subjected to filtration.
(b) 0.1 mL of pure water is added dropwise to a residue obtained by volatilizing a liquid component of a filtrate obtained.
(c) A temperature is set to 25°C, and the pH is measured by contacting a pH test paper with the pure water added dropwise.

## Description

### [TECHNICAL FIELD]

The present invention relates to a resin composition containing fully aromatic ether ketone such as polyether ketone, polyether ether ketone, or polyether ketone ether ketone ketone, and a method of producing the same, a molded article obtained by molding the resin composition, and a method of enhancing a retention stability of a melt viscosity of the resin composition.

### [BACKGROUND ART]

A fully aromatic ether ketone resin is also known as an abbreviation of polyaryl ether ketone (PAEK), and polyether ether ketone (PEEK), poly ether ketone (PEK), polyether ketone ketone (PEKK), polyether ketone ether ketone ketone (PEKEKK), and the like are placed on the market as products. Since a fully aromatic ether ketone resin generally has a high melting point (over 300°C), it is necessary to heat the resin to a high temperature in melting the resin. However, at such a high temperature, there is a problem that stability to a thermal degradation is lacked. Therefore, various measures have been taken for stabilization in a molten state (see Patent Literatures 1 and 2). The stabilization to a thermal oxidation in a molten state is realized by adding a phosphate or a mixture of phosphates to resin compositions disclosed in Patent Literatures 1 and 2.

### [Citation List]

### [Patent Literature]

[Patent Literature 1] Japanese Patent Application Publication No. 2018-520257
[Patent Literature 2] Japanese Patent Application Publication No. 2018-520258

### [SUMMARY OF THE INVENTION]

### [PROBLEM TO BE SOLVED BY THE INVENTION]

Meanwhile, it is known that a fully aromatic ether ketone resin thickens in a molten state as a retention time elapses. Such thickening is generally considered to be caused by crosslinking due to an oxidation in association with a processing temperature of a fully aromatic ether ketone resin being generally very high (over 350°C). Although the resin compositions disclosed in Patent Literatures 1 and 2 are intended to achieve the stabilization to the thermal oxidation in the molten state, an increase or decrease in a viscosity as a retention time elapses includes many factors such as a reaction between remaining reactive terminals, oxidative cross-linking, molecular chain elongation due to a side reaction by a remaining catalyst, and molecular chain breakage due to heat, oxygen, and residual impurities. Therefore, it is not possible to improve a retention stability of a melt viscosity simply by achieving the stabilization to the thermal oxidation.

The present invention has been devised in view of the above conventional problems, and an object of the present invention is to provide a fully aromatic ether ketone resin composition having an excellent retention stability of a melt viscosity, a method of producing the same, a molded article, and a method of enhancing a retention stability of a melt viscosity of the resin composition.

### [MEANS FOR SOLVING THE PROBLEM]

As a result of a diligent study to solve the above problems, the present inventor found that a retention stability of a melt viscosity can be enhanced by adjusting a pH of a fully aromatic ether ketone resin composition to a prescribed range, leading to the completion of the present invention.

One aspect of the present invention to solve the above problem is as follows.
(1) A fully aromatic ether ketone resin composition including: (A) a fully aromatic ether ketone resin; and (B) a salt composed of an acid and a base, in which a pH thereof obtained by performing measurement by means of a pH measurement method below is 6 to 8, and (A) the fully aromatic ether ketone resin is one or more selected from the group consisting of polyether ketone, polyether ether ketone, and polyether ketone ether ketone ketone.

### [pH measurement method]

(a) To 10 g of a powder of the fully aromatic ether ketone resin composition, 5 mL of acetone is added, then 100 mL of pure water is added thereto, a mixture is stirred for 10 minutes, and then the mixture is subjected to filtration.
(b) 0.1 mL of pure water is added dropwise to a residue obtained by volatilizing a liquid component of a filtrate obtained in (a) above.
(c) A temperature is set to 25°C, and the pH is measured by contacting a pH test paper with the pure water added dropwise to the residue in (b) above.

(2) The fully aromatic ether ketone resin composition according to (1) above, in which a pH of (B) the salt composed of an acid and a base is 4 to 9.

(3) The fully aromatic ether ketone resin composition according to (1) or (2) above, in which (A) the fully aromatic ether ketone resin is the polyether ketone.

(4) The fully aromatic ether ketone resin composition according to any one of (1) to (3) above, in which (B) the salt composed of an acid and a base is at least one of phosphates.

(5) A molded article obtained by molding the fully aromatic ether ketone resin composition according to any one of (1) to (4) above.

(6) A method of producing a fully aromatic ether ketone resin composition including: adding at least, to (A) a fully aromatic ether ketone resin, at least one of (B) an acid and a base, and a salt composed of an acid and a base, and adjusting a pH thereof obtained by performing measurement by means of a pH measurement method below to be 6 to 8.

### [pH measurement method]

(a) To 10 g of a powder of the fully aromatic ether ketone resin composition, 5 mL of acetone is added, then 100 mL of pure water is added thereto, a mixture is stirred for 10 minutes, and then the mixture is subjected to filtration.
(b) 0.1 mL of pure water is added dropwise to a residue obtained by volatilizing a liquid component of a filtrate obtained in (a) above.
(c) A temperature is set to 25°C, and the pH is measured by contacting a pH test paper with the pure water added dropwise to the residue in (b) above.

(7) A method of enhancing a retention stability of a melt viscosity of a fully aromatic ether ketone resin composition containing (A) a fully aromatic ether ketone resin that is one or more selected from the group consisting of polyether ketone, polyether ether ketone, and polyether ketone ether ketone ketone, the method including: adding (B) a salt composed of an acid and a base to the fully aromatic ether ketone resin composition and adjusting a pH thereof obtained by performing measurement by means of a pH measurement method below to be 6 to 8.

### [pH measurement method]

(a) To 10 g of a powder of the fully aromatic ether ketone resin composition, 5 mL of acetone is added, then 100 mL of pure water is added thereto, a mixture is stirred for 10 minutes, and then the mixture is subjected to filtration.
(b) 0.1 mL of pure water is added dropwise to a residue obtained by volatilizing a liquid component of a filtrate obtained in (a) above.
(c) A temperature is set to 25°C, and the pH is measured by contacting a pH test paper with the pure water added dropwise to the residue in (b) above.

### [Effect of the Invention]

According to the present invention, it is possible to provide a fully aromatic ether ketone resin composition having excellent retention stability of a melt viscosity, a method of producing the same, a molded article, and a method of enhancing a retention stability of a melt viscosity of the resin composition.

### [MODES FOR CARRYING OUT THE INVENTION]

### <Fully aromatic ether ketone resin composition>

A fully aromatic ether ketone resin composition (hereinafter, also simply referred to as "resin composition") of the present embodiment includes (A) a fully aromatic ether ketone resin; and (B) a salt composed of an acid and a base.

Further, a pH thereof obtained by performing measurement by means of a pH measurement method below is 6 to 8. Further, (A) the fully aromatic ether ketone resin is one or more selected from the group consisting of polyether ketone, polyether ether ketone, and polyether ketone ether ketone ketone.

### [pH measurement method]

(a) To 10 g of a powder of the fully aromatic ether ketone resin composition, 5 mL of acetone is added, then 100 mL of pure water is added thereto, a mixture is stirred for 10 minutes, and then the mixture is subjected to filtration.
(b) 0.1 mL of pure water is added dropwise to a residue obtained by volatilizing a liquid component of a filtrate obtained in (a) above.
(c) A temperature is set to 25°C, and the pH is measured by contacting a pH test paper with the pure water added dropwise to the residue in (b) above.

A pH of a fully aromatic ether ketone resin composition of the present embodiment is adjusted to a range of 6 to 8 by (B) a salt composed of an acid and a base, and therefore it is possible to enhance a retention stability of a melt viscosity. A mechanism thereof is inferred as follows.

There are two methods for polymerizing a fully aromatic ether ketone resin: (1) a nucleophilic aromatic substitution reaction and (2) a Friedel-Crafts acylation reaction, and in the present embodiment, a resin, that is polymerized by means of (1) the nucleophilic aromatic substitution reaction, is objected. That is, all of polyether ketone, polyether ether ketone, and polyether ketone ether ketone ketone, which are (A) fully aromatic ether ketone resins, are polymerized by means of (1) the nucleophilic aromatic substitution reaction. The fully aromatic ether ketone resin to be polymerized by means of (1) the nucleophilic aromatic substitution reaction is polymerized under basic conditions at a high temperature (300°C or higher) using a phenolic hydroxyl group and an aromatic halogen as reactive groups. To stop polymerization, a method of causing a terminal imbalance by means of a terminal blocking reaction and stopping the progress of polymerization is generally adopted (Japanese Unexamined Patent Application Publication No. Sho 61-138626). An alkali metal salt used as a basic catalyst is removed by washing with water after polymerization. It is considered from a polymerization mechanism that, if conditions such as a low reaction rate of a terminal blocking reaction and a remaining of basic catalyst are combined, when a resin is melted and retained, a polymerization reaction proceeds between reactive terminals, a molecular weight increases, and a resin is thickens. Therefore, in the present embodiment, by keeping the pH of the resin composition within the prescribed range, the reaction caused by a functional group of a terminal after polymerization is suppressed and the retention stability of the melt viscosity is enhanced.

Meanwhile, more specific conditions of a pH measurement method will be described. For stirring in (a) above, it is preferable to use a general method such as a magnetic stirrer or a mechanical stirrer, which enables uniform stirring in a system. Further, for the filtration in (b) above, it is preferable to use, as a filter material, a general material capable of separating a solid-liquid without elution of a filter material. Furthermore, as a pH test paper used in (c) above, it is sufficient if at least a pH of 1 to 11 can be measured using the pH test paper.

Each component of the fully aromatic ether ketone resin composition of the present embodiment will be described in detail below.

### [(A) Fully aromatic ether ketone resin]

The fully aromatic resin composition of the present embodiment contains, as (A) the fully aromatic ether ketone resins, one or more selected from the group consisting of polyether ketone (PEK), polyether ether ketone (PEEK), and polyether ketone ether ketone ketone (PEKEKK). The fully aromatic ether ketone resins are basic because the resins are polymerized by means of (1) the nucleophilic aromatic substitution reaction. From this viewpoint, a pH of the fully aromatic ether ketone resin itself is preferably 9 to 12. (A) The fully aromatic ether ketone resin is preferably polyether ketone (PEK).

As described above, there are two methods for polymerizing the fully aromatic ether ketone resin: (1) the nucleophilic aromatic substitution reaction and (2) the Friedel-Crafts acylation reaction. Among the above specific examples, only polyether ketone ketone (PEKK) is generally polymerized by means of (2) the Friedel-Crafts acylation reaction. Such polyether ketone ketone (PEKK) exhibits neutrality.

### [(B) Salt composed of acid and base]

In the present embodiment, (B) the salt composed of an acid and a base (hereinafter also referred to as "component (B)") is used to set a pH of the resin composition to 6 to 8. If the pH of the resin composition is more than 8, the melt viscosity increases due to retention, alternatively if the pH is less than 6, the melt viscosity decreases due to retention, and therefore the retention stability of the melt viscosity is inferior. The pH is preferably 6 to 7 and more preferably 7. In setting the pH of the resin composition to 6 to 8, two or more components (B) may be used.

As described above, in adjusting the pH of the resin composition to 6 to 8, it is preferable to use a component having a pH of 4 to 9 as the component (B). When a mixture obtained by mixing two or more components (B) is used, even if a pH of at least one component is not 4 to 9, it is sufficient if the pH of the mixture is within a range of 4 to 9.

There are no particular limitations on an acid and a base from which the component (B) is derived, as long as the pH of the resin composition can be adjusted to 6 to 8. Examples of an acid from which the component (B) is derived include a phosphoric acid, sulfuric acid, and the like. Further, examples of a base from which the component (B) is derived include a hydroxide of an alkali metal such as sodium hydroxide, hydroxides of alkaline earth metals such as calcium hydroxide and magnesium hydroxide and a hydroxide of magnesium, and ammonia, and the like.

Examples of the component (B) include at least one of phosphates, ammonium sulfate, and the like, and in particular, at least one of phosphates is preferable. Examples of the phosphates include sodium dihydrogen phosphate, disodium hydrogen phosphate, potassium dihydrogen phosphate, dipotassium hydrogen phosphate, calcium dihydrogen phosphate, calcium hydrogen phosphate, magnesium dihydrogen phosphate, magnesium hydrogen phosphate, ammonium dihydrogen phosphate, diammonium hydrogen phosphate, and the like.

The amount of the component (B) may be set such that the pH of the resin composition is 6 to 8, and the amount may be 200 to 2000 ppm.

### [Other components]

In the present embodiment, one or more of the following can be added to a thermoplastic resin as common additives when needed: a lubricant, a mold release agent, an antistatic agent, a surfactant, a flame retardant, an organic polymer material, and an inorganic or organic powdery or plate-like filler. However, even when other components are added, the pH of the resin composition needs to be within the range of 6 to 8.

### <Molded article>

A molded article of the present embodiment is obtained by molding the fully aromatic ether ketone resin composition of the present embodiment described above. Since the molded article has excellent retention stability of the melt viscosity, the molded article can be stably used even if the molded article is obtained by performing a molding processes involving a long-time exposure to a high temperature such as continuous molding for a long time by injection-molding or solid phase extrusion of a long retention time.

There are no particular limitations as for a method of fabricating the molded article using the fully aromatic ether ketone resin composition of the present embodiment, and a known method can be adopted. The fully aromatic ether ketone resin composition of the present embodiment is put into an extruder, and then melt-kneaded and pelletized to form a pellet, then the pellet is put into an injection-molding machine having a predetermined mold, and accordingly the molded article can be fabricated by means of injection-molding, for example.

The molded article of the present embodiment can be suitably used for use applications such as an automobile, aviation, heavy industry (steel and power plants), and electronic components.

### <Method of producing fully aromatic ether ketone resin composition>

In a method of producing the fully aromatic ether ketone resin composition of the present embodiment, at least, to (A) the fully aromatic ether ketone resin, at least one of (B) an acid and a base, and a salt composed of an acid and a base is added, and adjustment is made such that a pH obtained by means of the following pH measurement method is 6 to 8.

### [pH measurement method]

(a) To 10 g of powders of the fully aromatic ether ketone resin composition, 5 mL of acetone is added, then 100 mL of pure water is added thereto, the mixture is stirred for 10 minutes, and then the mixture is subjected to filtration.
(b) 0.1 mL of pure water is added dropwise to a residue obtained by volatilizing a liquid component of a filtrate obtained in (a) above.
(c) A temperature is set to 25°C, and a pH is measured by contacting a pH test paper with the pure water added dropwise to the residue in (b).

In the producing method of the present embodiment, a pH of the resin composition is adjusted to 6 to 8 by adding at least, to (A) the fully aromatic ether ketone resin, at least one of (B) an acid and a base, and a salt composed of an acid and a base as with the resin composition of the present embodiment described above. By adjusting the pH of the resin composition to 6 to 8, it is possible to achieve excellent retention stability of the melt viscosity as described above.

In the producing method of the present embodiment, at least one of (B) an acid and a base, and a salt composed of an acid and a base is used in adjusting the pH of the resin composition. Among them, the salt composed of an acid and a base (hereinafter referred to as "salt A") is the same as the salt composed of an acid and a base contained in the resin composition of the present embodiment, and therefore a description thereof is omitted and only the acid and base will be described below.

As a combination of an acid and a base to be added in the producing method of the present embodiment, a combination is selected in which an acid and a base form the salt A after neutralizing the acid and base. For example, when the salt A is sodium dihydrogen phosphate, a combination of an acid and base is a combination of a phosphoric acid and sodium hydroxide, and when the salt A is sodium acetate, a combination of an acid and base is a combination of an acetic acid and sodium hydroxide. That is, if an acid and a base are added to a fully aromatic ether ketone resin, the acid and base form the salt A by means of a neutralization reaction during blending. After the salt A is formed, an effect of excellent retention stability of the melt viscosity is exhibited.

The addition amount of an acid and base is set such that a pH of a salt formed after neutralization of the acid and base is in the same range as that of the salt A described above.

### <Method of enhancing retention stability of melt viscosity of fully aromatic ether ketone resin composition>

A method of enhancing retention stability of the melt viscosity of the fully aromatic ether ketone resin composition of the present embodiment (hereinafter abbreviated as "method of enhancing retention stability") is a method of enhancing retention stability of a melt viscosity of a fully aromatic ether ketone resin composition containing (A) the fully aromatic ether ketone resins which are one or more selected from the group consisting of polyether ketone, polyether ether ketone, and polyether ketone ether ketone ketone. (B) The salt composed of an acid and a base is added to the fully aromatic ether ketone resin composition, and a pH obtained by performing measurement by means of the following pH measurement method is set to 6 to 8.

### [pH measurement method]

(a) To 10 g of powders of the fully aromatic ether ketone resin composition, 5 mL of acetone is added, then 100 mL of pure water is added thereto, the mixture is stirred for 10 minutes, and then the mixture is subjected to filtration.
(b) 0.1 mL of pure water is added dropwise to a residue obtained by volatilizing a liquid component of a filtrate obtained in (a) above.
(c) A temperature is set to 25°C, and a pH is measured by contacting a pH test paper with the pure water added dropwise to the residue in (b).

In the fully aromatic ether ketone resin composition of the present embodiment described above, by setting a pH to be within a prescribed range, a reaction caused by a functional group of a terminal after polymerization is suppressed and retention stability of a melt viscosity is enhanced. That is, the retention stability of the melt viscosity can be enhanced by setting the pH of the resin composition to be within the prescribed range. Therefore, in the method of enhancing retention stability of the present embodiment, the retention stability of the melt viscosity can be enhanced by adding (B) the salt composed of an acid and a base and setting the pH obtained by performing measurement by means of the pH measurement method to be 6 to 8.

In the method of enhancing retention stability of the present embodiment, (A) the fully aromatic ether ketone resins are one or more selected from the group consisting of polyether ketone, polyether ether ketone, and polyether ketone ether ketone ketone, the details thereof are the same as those described above, and therefore a description thereof is omitted. Further, (B) the salt composed of an acid and a base is also the same as that described above for the fully aromatic ether ketone resin composition of the present embodiment, and therefore a description thereof is omitted here. Preferred amount ranges of each component are also the same as those described above for the fully aromatic ether ketone resin composition of the present embodiment.

### [Examples]

Hereinafter, the present embodiment will be described more specifically by way of examples, but the present embodiment is not limited to the examples below.

### [Examples 1 to 6 and Comparative Examples 1 to 5]

In each example and comparative example, raw material components shown in Table 1 were blended in the ratio shown in Table 1 to obtain the powder of a fully aromatic ether ketone resin composition. After (B) the salt composed of an acid and a base was used to obtain an aqueous solution (solvent: distilled water, concentration: 2000 ppm/mL), other components were added thereto.

Details of raw material components used are shown below.

### (A) Fully aromatic ether ketone resin

### • Polyether ketone (PEK)

The powder of polyether ketone was obtained by performing polymerization according to a production method disclosed in Japanese Unexamined Patent Application Publication No. 2009-227961. A pH of the obtained powder of polyether ketone was 10.

A pH of a fully aromatic ether ketone resin was measured in the same manner as a pH measurement method of a fully aromatic ether ketone resin composition which will be described later.

### (B) The salt composed of an acid and a base

- Sodium dihydrogen phosphate (dihydrate); pH: 4
- Disodium hydrogen phosphate (anhydrous); pH: 9
- Trisodium phosphate (12-hydrate); pH: 12
- Potassium dihydrogen phosphate; pH: 4
- Dipotassium hydrogen phosphate; pH: 9
- Ammonium dihydrogen phosphate; pH: 4
- Ammonium sulfate; pH: 4

### [Evaluation]

### (1) pH

To 10 g of powders of fully aromatic ether ketone resin compositions obtained in each example and comparative example, 5 mL of acetone is added, then 100 mL of pure water is added thereto, the mixture is stirred for 10 minutes, and then the mixture is subjected to filtration. 0.1 mL of pure water is added dropwise to a residue obtained by volatilizing a liquid component of a filtrate obtained. A temperature is set to 25°C, and a pH is measured by contacting a pH test paper with the pure water added dropwise to the residue. Tables 1 and 2 show the measured pH.

### (2) Retention of melt viscosity

After drying the powder of fully aromatic ether ketone resin compositions obtained in each example and comparative example at 140°C for 9 hours, 0.8 g thereof was metered in the center of a circular mold (outer diameter: 50 mm, inner diameter: 21 mm, and thickness: 2 mm) made of SUS304, and press-molding was performed using a vacuum heat press apparatus (manufactured by Imoto machinery Co., LTD.) under the following molding conditions and a test piece for measurement was obtained.

### [Molding conditions]

Heating plate temperature: 400°C
Preheating time: 3 minutes
Press pressure: 10 tons
Press time: 30 seconds

For the obtained test piece, a complex viscosity in a molten state was measured using a rheometer (manufactured by TA Instruments, Discovery HR-3) under the following measurement conditions, and retention of a melt viscosity was calculated using formula (I) below. Tables 1 and 2 show the calculated retention of the melt viscosity. Retention of melt viscosity (%) = [(complex viscosity at 30 min) / (complex viscosity at 5 min)] * 100

### [Measurement conditions]

Plate diameter: 25 mm
Gap spacing: 1000 µm
Measurement temperature: 400°C
Measurement mode: vibration
Measurement atmosphere: nitrogen
Measurement time: 5 to 30 minutes
Measurement range: 100 rad/s
Strain: 3%

### (3) Retention stability of melt viscosity

Evaluation was made based on retention of a melt viscosity calculated in each example and comparative example. That is, when retention of a melt viscosity was 95 to 105%, it was evaluated as "good", and when the retention was less than 95% or 105% or higher, it was evaluated as "poor". When an evaluation result was "good", it indicated that a retention stability of a melt viscosity was excellent. Tables 1 and 2 show the evaluation results.

**[Table 1]**

| | | | Example 1 | Example 2 | Example 3 | Example 4 | Example 5 | Example 6 |
|---|---|---|---|---|---|---|---|---|
| (A) Fully aromatic ether ketone resin | Polyether ketone | g | 5.0 | 5.0 | 5.0 | 5.0 | 5.0 | 5.0 |
| | pH | - | 10 | 10 | 10 | 10 | 10 | 10 |
| (B) Salt composed of acid and base | Sodium dihydrogen phosphate | ppm | 500 | 250 | 1000 | - | - | - |
| | Disodiumhydrogen phosphate | ppm | - | 250 | 1000 | - | - | - |
| | Trisodium phosphate | ppm | - | - | - | - | - | - |
| | Potassium dihydrogen phosphate | ppm | - | - | - | 250 | - | - |
| | Dipotassiumhydrogen phosphate | ppm | - | - | - | 250 | - | - |
| | Ammonium dihydrogen phosphate | ppm | - | - | - | - | 200 | - |
| | Ammonium sulfate | ppm | - | - | - | - | - | 400 |
| | pH | - | 4 | 7 | 7 | 7 | 4 | 4 |
| Fully aromatic ether ketone resin composition | pH | - | 6 | 7 | 7 | 7 | 7 | 6 |
| | Retention of melt viscosity | % | 96 | 101 | 98 | 102 | 103 | 98 |
| | Retention stability of melt viscosity | - | Good | Good | Good | Good | Good | Good |

**[Table 2]**

| | | | Comparative Example 1 | Comparative Example 2 | Comparative Example 3 | Comparative Example 4 | Comparative Example 5 |
|---|---|---|---|---|---|---|---|
| (A) Fully aromatic ether ketone resin | Polyether ketone | g | 5.0 | 5.0 | 5.0 | 5.0 | 5.0 |
| | pH | - | 10 | 10 | 10 | 10 | 10 |
| (B) Salt composed of acid and base | Sodium dihydrogen phosphate | ppm | - | 3000 | - | - | - |
| | Dis odium hydrogen phosphate | ppm | - | - | 500 | - | - |
| | Trisodiumphosphate | ppm | - | - | - | 500 | - |
| | Potassium dihydrogen phosphate | ppm | - | - | - | - | - |
| | Dipotassium hydrogen phosphate | ppm | - | - | - | - | - |
| | Ammonium dihydrogen phosphate | ppm | - | - | - | - | 600 |
| | Ammonium sulfate | ppm | - | - | - | - | - |
| | pH | - | - | 4 | 9 | 12 | 4 |
| Fully aromatic ether ketone resin composition | pH | - | 10 | 4 | 10 | 12 | 5 |
| | Retention of melt viscosity | % | 115 | 88 | 110 | 115 | 83 |
| | Retention stability of melt viscosity | - | Poor | Poor | Poor | Poor | Poor |

From Tables 1 and 2, it can be seen that a retention stability of a melt viscosity was excellent in all of Examples 1 to 6 in which a pH of a fully aromatic ether ketone resin composition was in a range of 6 to 8. Meanwhile, a retention stability of a melt viscosity was inferior in Comparative Examples 1 to 5 in which a pH of a fully aromatic ether ketone resin composition was not within the range of 6 to 8.

## Claims

1. A fully aromatic ether ketone resin composition comprising:
(A) a fully aromatic ether ketone resin; and
(B) a salt composed of an acid and a base, wherein
a pH thereof obtained by performing measurement by means of a pH measurement method below is 6 to 8, and
(A) the fully aromatic ether ketone resin is one or more selected from the group consisting of polyether ketone, polyether ether ketone, and polyether ketone ether ketone ketone.
[pH measurement method]
(a) To 10 g of a powder of the fully aromatic ether ketone resin composition, 5 mL of acetone is added, then 100 mL of pure water is added thereto, a mixture is stirred for 10 minutes, and then the mixture is subjected to filtration.
(b) 0.1 mL of pure water is added dropwise to a residue obtained by volatilizing a liquid component of a filtrate obtained in (a) above.
(c) A temperature is set to 25°C, and the pH is measured by contacting a pH test paper with the pure water added dropwise to the residue in (b) above.

2. The fully aromatic ether ketone resin composition according to claim 1, wherein
a pH of (B) the salt composed of an acid and a base is 4 to 9.

3. The fully aromatic ether ketone resin composition according to claim 1 or 2, wherein
(A) the fully aromatic ether ketone resin is the polyether ketone.

4. The fully aromatic ether ketone resin composition according to any one of claims 1 to 3, wherein
(B) the salt composed of an acid and a base is at least one of phosphates.

5. A molded article obtained by molding the fully aromatic ether ketone resin composition according to any one of claims 1 to 4.

6. A method of producing a fully aromatic ether ketone resin composition comprising:
adding at least, to (A) a fully aromatic ether ketone resin, at least one of (B) an acid and a base, and a salt composed of an acid and a base, and adjusting a pH thereof obtained by performing measurement by means of a pH measurement method below to be 6 to 8.
[pH measurement method]
(a) To 10 g of a powder of the fully aromatic ether ketone resin composition, 5 mL of acetone is added, then 100 mL of pure water is added thereto, a mixture is stirred for 10 minutes, and then the mixture is subjected to filtration.
(b) 0.1 mL of pure water is added dropwise to a residue obtained by volatilizing a liquid component of a filtrate obtained in (a) above.
(c) A temperature is set to 25°C, and the pH is measured by contacting a pH test paper with the pure water added dropwise to the residue in (b) above.

7. A method of enhancing a retention stability of a melt viscosity of a fully aromatic ether ketone resin composition containing (A) a fully aromatic ether ketone resin that is one or more selected from the group consisting of polyether ketone, polyether ether ketone, and polyether ketone ether ketone ketone, the method comprising:
adding (B) a salt composed of an acid and a base to the fully aromatic ether ketone resin composition and adjusting a pH thereof obtained by performing measurement by means of a pH measurement method below to be 6 to 8.
[pH measurement method]
(a) To 10 g of a powder of the fully aromatic ether ketone resin composition, 5 mL of acetone is added, then 100 mL of pure water is added thereto, a mixture is stirred for 10 minutes, and then the mixture is subjected to filtration.
(b) 0.1 mL of pure water is added dropwise to a residue obtained by volatilizing a liquid component of a filtrate obtained in (a) above.
(c) A temperature is set to 25°C, and the pH is measured by contacting a pH test paper with the pure water added dropwise to the residue in (b) above.
